# EUROPEAN PATENT APPLICATION

(11) **EP 4 617 236 A1**
(43) Date of publication of application: **17.09.2025**
(21) Application number: 23889106.3
(22) Date of filing: 07.11.2023
(51) Int. Cl.: C01B 32/77, B01J 23/28, B01J 23/75, B01J 23/755, B01J 23/30, B01J 8/02, B01J 8/00

(54) **SYNTHESIS METHOD OF CARBONYL SULFIDE AND APPARATUS THEREFOR**

(30) Priority: 10.11.2022 KR 20220149785
(71) Applicant: POSCO Co., Ltd, Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: KIM, Joon-Woo, Suncheon-si, Jeollanam-do 58006 (KR); KIM, Ji-Won, Gwangyang-si, Jeollanam-do 57767 (KR); JEONG, Cheon-Woo, Suncheon-si, Jeollanam-do 58006 (KR); SHIN, Hye-Sun, Gwangyang-si, Jeollanam-do 57795 (KR); PARK, Yun-Sung, Gwangyang-si, Jeollanam-do 57809 (KR); LEE, Dong-Cheol, Bucheon-si, Gyeonggi-do 14547 (KR)
(74) Representative: Nederlandsch Octrooibureau
(86) International application number: PCT/KR2023/017762
(87) International publication number: WO 2024/101848

(57) **Abstract**

The present invention relates to a method and an apparatus for synthesizing carbonyl sulfide and, more specifically, to: a method for synthesizing carbonyl sulfide, comprising the steps of obtaining a mixed gas containing carbonyl sulfide by contacting at least one form of sulfur from among a liquid phase and a gas phase with carbon monoxide (CO), and further converting unreacted sulfur and carbon monoxide into carbonyl sulfide by contacting the mixed gas with a sulfurization catalyst, wherein the sulfurization catalyst comprises molybdenum (Mo) as the main active metal; and an apparatus for synthesizing carbonyl sulfide, comprising a gas-liquid reactor that obtains a mixed gas containing carbonyl sulfide by contacting carbon monoxide (CO) with at least one form of sulfur from among a liquid phase and a gas phase, and a catalytic reactor that further converts unreacted sulfur and carbon monoxide into carbonyl sulfide by contacting the mixed gas with a sulfurization catalyst, wherein the catalytic reactor comprises a sulfurization catalyst including molybdenum (Mo) as the main active metal.

## Description

### Technical Field

The present disclosure relates to a method and apparatus for synthesizing carbonyl sulfide used as a main raw material for various chemical products, and more specifically, to a method and apparatus for synthesizing carbonyl sulfide using a catalyst containing molybdenum (Mo) as a main active metal.

### Background Art

Carbonyl sulfide (COS) is widely used as a main raw material for pesticides, medicines, and various chemical products due to its unique molecular structure with two double bonds. In particular, carbonyl sulfide (COS) is known as a useful gas for forming carbon hard masks in semiconductor etching processes. In detail, recently, it has been reported that when used in combination with existing etching gases in the etching process, which may be said to be the most important process in semiconductor manufacturing processes, the etching characteristics may be greatly improved, and it is a useful substance that has been receiving significant attention as an etching gas material for next-generation semiconductor processes.

Such carbonyl sulfide (COS) is usually manufactured using carbon monoxide and sulfur as raw materials. Many methods have been proposed to date, regarding the method of synthesizing carbonyl sulfide using carbon monoxide and sulfur as raw materials. In general, methods for manufacturing COS are known, including a method in which carbon monoxide (CO) and liquid sulfur are reacted under high-temperature conditions in a system without a catalyst, a method in which carbon monoxide (CO) and liquid sulfur are reacted under medium-temperature conditions in a system with a catalyst, and a method in which carbon dioxide (CO₂) and carbon disulfide (CS₂) are reacted in the presence of a catalyst.

For example, US Patent No. 4,078,045 discloses a method of heating supplied sulfur to form a gas, mixing the gaseous sulfur and carbon monoxide to form a mixed gas, and supplying the mixed gas to a reactor to synthesize carbonyl sulfide. This method suggests a technology for synthesizing carbonyl sulfide without using a catalyst. However, the raw material mixing device that heats sulfur to form a gas and mixes the sulfur gas and carbon monoxide, and the reaction device receiving the mixed gas containing sulfur and carbon monoxide and reacting the same, are separate, and thus the cost of the equipment is high, and a high amount of energy is required to maintain each temperature, which is not economically desirable, and is a factor that increases the manufacturing cost.

Accordingly, a method of applying a catalyst is suggested, but there is a problem that a sufficient conversion rate may not be exhibited, even under conditions in which a catalyst is present, and on the other hand, the method of using CO₂ and CS₂ has a problem that the selectivity is low due to difficulty in controlling the side reaction. Therefore, when a catalyst is provided that may facilitate sulfidation in the catalytic reaction of CO and sulfur and thereby increase the production rate, it is expected to be widely applied in related fields.

### Summary of Invention

### Technical Problem

An aspect of the present disclosure is to solve the problems of related art technologies in synthesizing carbonyl sulfide using carbon monoxide and sulfur as raw materials and to provide a method for synthesizing carbonyl sulfide economically and technically.

Another aspect of the present disclosure is to provide an apparatus that may be applied to the synthesis of carbonyl sulfide.

### Solution to Problem

According to an aspect of the present disclosure, a method for synthesizing carbonyl sulfide includes an operation of contacting carbon monoxide (CO) and sulfur in at least one form of a liquid phase and a gas phase and obtaining a mixed gas containing carbonyl sulfide; and an operation of contacting the mixed gas with a sulfurization catalyst and further converting unreacted sulfur and carbon monoxide into carbonyl sulfide, wherein the sulfurization catalyst contains molybdenum (Mo) as a main active metal.

According to another aspect of the present disclosure, an apparatus for synthesizing carbonyl sulfide includes a gas-liquid reactor for contacting carbon monoxide (CO) and sulfur in at least one form of a liquid phase and a gas phase and obtaining a mixed gas containing carbonyl sulfide; and a catalytic reactor for contacting the mixed gas with a sulfurization catalyst and further converting unreacted sulfur and carbon monoxide into carbonyl sulfide, wherein the catalytic reactor includes a sulfurization catalyst containing molybdenum (Mo) as a main active metal.

### Advantageous Effects of Invention

According to the present disclosure, carbonyl sulfide gas may be synthesized economically and with high efficiency at an improved synthesis rate. The present disclosure may improve the COS conversion rate by adsorbing unreacted sulfur using a catalyst that is easy to sulfidize and increasing the reactivity thereof with CO by utilizing catalyst activation energy. In addition, by enabling the operation of the catalyst at a low temperature, the production of byproducts such as H₂S, CS₂, CO₂, SO₂ and the like generated at a high temperature may be suppressed, thereby producing high-purity COS.

### Brief Description of Drawings

FIG. 1 schematically illustrates the process of the method for synthesizing carbonyl sulfide of the present disclosure.
FIG. 2 schematically illustrates an example apparatus for synthesizing carbonyl sulfide of the present disclosure.

### Best Mode for Invention

Hereinafter, an example embodiment of the present disclosure will be described with reference to the attached drawings. However, the embodiment of the present disclosure may be modified in various other forms, and the scope of the present disclosure is not limited to the embodiment described below.

According to the present disclosure, a method and apparatus for synthesizing carbonyl sulfide with improved selectivity and yield are provided.

More specifically, the method for synthesizing carbonyl sulfide of the present disclosure includes an operation of contacting carbon monoxide (CO) and sulfur in at least one form of a liquid phase and a gas phase to obtain a mixed gas containing carbonyl sulfide; and an operation of contacting the mixed gas with a sulfurization catalyst to further convert unreacted sulfur and carbon monoxide into carbonyl sulfide, wherein the sulfurization catalyst contains molybdenum (Mo) as a main active metal.

Sulfur in at least one form of a liquid phase and a gas phase may be provided by heating solid sulfur, and at this time, the sulfur may be in a liquid phase or a mixture of a liquid phase and a gas phase. For example, solid sulfur may be heated to a temperature of its melting point or more, for example, 112.8°C or higher under 1 atm, to provide liquid sulfur or fluidized sulfur including liquid and gas phases. The sulfur may be heated in a sulfur reaction tank (10) to remove moisture and the like in a gas phase and purged with N2 to increase purity thereof.

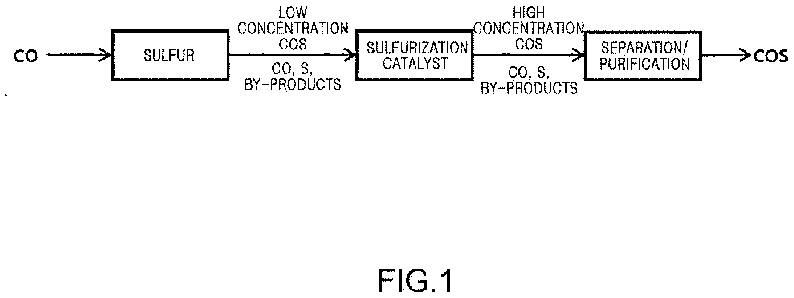

The fluidized sulfur and CO are brought into contact to obtain a mixed gas containing carbonyl sulfide, and at this time the mixing method is not particularly limited, but for example, CO may be bubbled to the liquid sulfur in a gas-liquid reactor (20) to contact the liquid sulfur in the form of bubbles to convert the liquid sulfur into carbonyl sulfide. As schematically illustrated in FIG. 1, as a result, the unreacted CO and S are subsequently additionally converted into carbonyl sulfide using a sulfurization catalyst. Thereafter, trace amounts of unreacted materials and byproducts may be separated and purified to produce high-purity COS. At this time, the byproduct may include at least one of H₂S, CS₂, SO₂, CO₂, and the like, and the unreacted product may include at least one of CO, gaseous S, and the like. As the technology for removal thereof, for example, the gaseous S may be separated through a filter after lowering the temperature to convert the same into a liquid or solid phase, and the remaining material may be separated from COS through low-temperature distillation, for example, distillation at -70 to 0°C.

Meanwhile, in the operation of obtaining the mixed gas, it is preferable that sulfur is supplied at a temperature of 350 to 500°C, and thus the gas-liquid reactor (20) may also be maintained in this temperature range. The sulfur may have a temperature of, for example, 400 to 450°C, preferably 400 to 444°C. When sulfur is provided at a temperature in the above range, a high COS conversion rate may be obtained.

Meanwhile, the carbon monoxide in the operation of obtaining the mixed gas may be supplied at a flow rate of 5 to 10 ml/min, for example, may be supplied at a flow rate of 5 to 8 ml/min. When carbon monoxide is supplied at a flow rate in the above range, a high COS conversion rate may be obtained.

Furthermore, the mixed gas obtained by the operation of obtaining the mixed gas may be additionally converted into carbonyl sulfide by performing an operation of retaining for a retention time of 30 seconds to 5 minutes. This operation may be performed, for example, in a retention reactor (30), and when a retention time in the above range is given, a more improved COS conversion rate may be obtained.

Thereafter, the present disclosure includes an operation of contacting the mixed gas with a sulfide catalyst to further convert unreacted sulfur and carbon monoxide into carbonyl sulfide, and at this time the sulfide catalyst that may be used in the present disclosure contains molybdenum (Mo), a transition metal, as a main active metal to increase the COS synthesis rate, and since electrons are pentavalent (5+) and form a relatively weak bond with sulfur, in a situation where sulfur is continuously supplied, sulfur and CO adsorbed on Mo lower the activation energy by the catalyst to facilitate the reaction, so that conversion into the COS is well performed, and the converted sulfur is continuously supplied in the raw material, and thus reacts with Mo to become sulfide and may maintain the catalytic active site.

In the operation of contacting the mixed gas with a sulfurization catalyst to further convert unreacted sulfur and carbon monoxide into carbonyl sulfide, components such as H₂S, SO₂, CS₂, and the like generated as side reactions may also be converted into carbonyl sulfide under the catalyst.

Meanwhile, the sulfurization catalyst may be a catalyst supported by at least one porous support selected from the group consisting of silica, alumina, and titania, and including at least one selected from the group consisting of cobalt, nickel, and tungsten as a promoter. For example, the sulfurization catalyst may be supported on an alumina support, include manganese as a main active metal, and include at least one selected from the group consisting of cobalt and nickel as a promoter.

Furthermore, the method for synthesizing carbonyl sulfide of the present disclosure may additionally include an operation of cooling a resultant obtained in the operation of further converting by the sulfurization catalyst to a temperature less than the boiling point of sulfur to separate liquid sulfur into gas and liquid. The liquid sulfur thus manufactured may be recycled as a raw material.

Subsequently, the gas from which sulfur is removed by the operation of separating sulfur into gas and liquid may be a mixed gas containing COS and CO, and traces of sulfur dust and the like included in the mixed gas may be purified through a filter, and further, carbonyl sulfide may be separated and obtained from the gas containing COS and CO by boiling point separation, that is, at a temperature of a boiling point or more of CO and less than a boiling point of COS. More specifically, CO may be separated into a gaseous state from liquid COS at a temperature of -139 to -51°C under 1 atm.

According to another aspect of the present disclosure, an apparatus for synthesizing carbonyl sulfide is provided. The contents described in the method for synthesizing carbonyl sulfide described above are equally applied to the apparatus for synthesizing carbonyl sulfide of the present disclosure.

The apparatus for synthesizing carbonyl sulfide of the present disclosure includes a gas-liquid reactor (20) that contacts carbon monoxide (CO) and sulfur in at least one form of a liquid phase and a gas phase to obtain a mixed gas containing carbonyl sulfide; and a catalytic reactor (40) that contacts the mixed gas with a sulfurization catalyst to further convert unreacted sulfur and carbon monoxide into carbonyl sulfide, and the catalytic reactor includes a sulfurization catalyst containing molybdenum (Mo) as a main active metal.

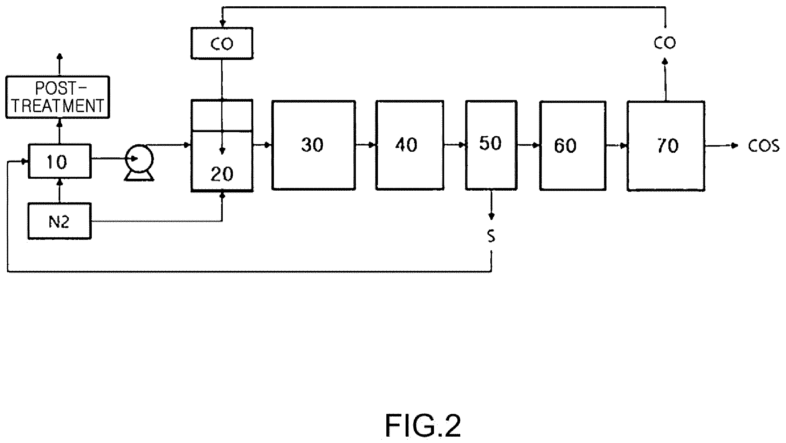

An example apparatus for synthesizing carbonyl sulfide of the present disclosure is illustrated in FIG. 2.

The apparatus for synthesizing carbonyl sulfide of the present disclosure may further include a sulfur reaction tank (10) that supplies the sulfur. As described above, the temperature of the solid sulfur in the sulfur reaction tank may be increased to a temperature at which the solid sulfur may be converted into a liquid phase or a mixture of liquid and gas phases, and the sulfur whose temperature has been increased in the sulfur reaction tank may be supplied to the gas-liquid reactor. In addition, moisture and the like may be removed as a gas by heating in the sulfur reaction tank (10) and purged with N2 to increase the purity of sulfur.

In the gas-liquid reactor (20), a mixed gas containing carbonyl sulfide is obtained by contacting CO and sulfur in the fluidized phase, and as illustrated in FIG. 2, for example, CO may be bubbled into the liquid sulfur in the gas-liquid reactor (20) to contact the same in the form of bubbles and converted into carbonyl sulfide. In FIG. 2, CO is illustrated as being injected from the top, but this is an example, and CO may be supplied by bubbling from the bottom of the liquid sulfur. In this way, unreacted CO and S in the gas-liquid reactor are subsequently converted into carbonyl sulfide using a sulfurization catalyst.

In addition, a retention reactor (30), which is disposed downstream of the gas-liquid reactor (20) and upstream of the catalytic reactor (40) and which may retain the mixed gas discharged from the gas-liquid reactor, is provided, so that the mixed gas may be additionally converted into carbonyl sulfide.

Furthermore, the apparatus for synthesizing carbonyl sulfide of the present disclosure additionally includes a condenser (50), for example, a condenser which is disposed downstream of the catalytic reactor (40) and which cools the resultant product discharged from the catalytic reactor to a temperature less than the melting point of sulfur to separate liquid sulfur into gas and liquid, so that the operation of lowering the temperature of the condenser to a temperature less than the boiling point of sulfur to separate liquid sulfur into gas and liquid may be performed. The liquid sulfur thus manufactured may be reintroduced into the sulfur reaction tank (10) as illustrated in FIG. 2 and recycled as a raw material.

The gas from which sulfur has been removed in a liquid phase in the condenser may be a mixed gas containing COS and CO, and trace amounts of sulfur dust and the like included in the mixed gas may be purified through an optional additional filter (60), and further, a cold box (70) disposed downstream of the condenser and obtaining liquid carbonyl sulfide by boiling point separation from the gas discharged from the condenser may be additionally included, and by the cold box (70), liquid carbonyl sulfide may be obtained by boiling point separation from the gas containing COS and CO at a temperature of the boiling point or more of CO and less than the boiling point of COS.

Hereinafter, the present disclosure will be described in more detail through detailed examples. The following examples are merely examples to help understanding of the present disclosure, and the scope of the present disclosure is not limited thereto.

### Mode for Invention

### Example

### 1. Synthesis of carbonyl sulfide

Solid sulfur was heated to 200 to 500°C to prepare sulfur in the form of a liquid and/or gas phase to be stored in a sulfur reaction tank. Then, CO was supplied to the reaction tank at a flow rate of 5 to 100 ml/min and contacted with sulfur to be converted into COS. Then, the separated unreacted CO and S were additionally converted into COS using a sulfide catalyst at 170 to 300°C. Thereafter, a small amount of unreacted material and side-products were separated and purified to produce high-purity COS. This process is schematically illustrated in FIG. 1. At this time, side-products after the reaction may be generated as H₂S, CS₂, SO₂, and CO₂, but the amount thereof was so small that separation was confirmed to be unnecessary. Meanwhile, unreacted raw materials CO and S may be additionally separated as needed. For example, S may be separated by lowering the temperature thereof to room temperature, being converted to a solid phase, and then being filtered through a filter, and CO may be analyzed together with the product to measure the residual amount.

The above reaction was performed in the reaction system schematically illustrated in FIG. 2. More specifically, solid elemental sulfur is heated to 120 to 150°C so that it may be transferred from the sulfur reaction tank (10), and the purity thereof is increased by purging with N2 to remove the contained moisture and the like as a gas phase. Furthermore, when purging with N2 to remove H₂O contained in S, since the temperature inside the chamber is 120 to 150°C, H₂O and S may react to generate H₂S. Although this is suitable for the atmospheric emission level, it is desirable to treat and send it as an odorous substance, and thus H₂S may be removed through a scrubber.

Liquid and/or gaseous sulfur is continuously supplied to the gas-liquid reactor (20). The supplied sulfur is heated to the reaction temperature of 200 to 500°C for the first reaction with CO, and CO is supplied from the top of the reactor to the inside thereof to utilize the heat from the upper end portion of the reactor. The gaseous CO and the liquid sulfur react in a bubble-form (bubbling) contact manner to primarily generate COS.

Unreacted CO and vaporized sulfur move together through the retention reactor (30) to secondarily generate COS. Afterwards, they pass through the catalytic reactor (40) at 170 to 300°C to thirdly generate COS, and impurities such as H₂S, SO₂, CS₂ and the like generated as side reactions are converted to COS by the catalyst. The main role of the catalyst is to convert the residual CO and S to COS, and the impurities are converted to COS through various reactions including the following, occurring in the catalyst.

H₂S + CO → COS + H₂

SO₂ + CO → COS + O₂

CS₂ + H₂O → COS + H₂S

However, at this time, the impurity concentration was confirmed to be so low that measurement was unnecessary. Meanwhile, the sulfur was recovered in a liquid phase by lowering the same to less than 112.8°C, which is the liquid temperature of sulfur at 1 atm, in the condenser (50), and a small amount of sulfur dust was separated through a filter (60). Finally, the unreacted CO was separated through the boiling point temperature separation of COS and CO in a cold box (70) to manufacture high-purity COS.

### 2. Results according to synthesis conditions of carbonyl sulfide

### (1) Effect on Pretreatment

N₂ was purged into the sulfur reaction tank (10), which is the sulfur liquefaction tank of FIG. 2, and the discharged gas was measured with an analyzer, and the pretreatment was performed so that the H₂O concentration was reduced and the moisture contained in the liquid sulfur was close to 0. By doing this, the H₂O, which is the cause of the generation of impurities such as H₂S, SO₂, CO₂ and the like, may be removed, thereby improving the COS concentration and reducing the purification and separation equipment for high purity.

**[Table 1]**

| | CO (Volume %) | COS (Volume %) | H₂S (ppm ) | CO₂ (ppm) | SO₂ (ppm) | CS₂ (ppm) |
|---|---|---|---|---|---|---|
| No Pretreat ment | 25.56 | 74.30 | 850 | 130 | 370 | 40 |
| Pretreat ment | 25.20 | 74.80 | 0 | 0 | 0 | 0 |

### (2) Effect according to sulfur temperature

The final CO and COS volume% according to the temperature of sulfur supplied to the gas-liquid reactor (20) are illustrated in Table 2 below.

**[Table 2]**

| Sulfur Temperature (°C) | CO Flow Rate (ml/min) | Retention Time(s) | Catalyst Presence or Absence | CO (Volume %) | COS (Volume %) |
|---|---|---|---|---|---|
| 200 | 5 | 30 | Absence | 89.5 | 10.5 |
| 250 | 5 | 30 | Absence | 67.4 | 32.6 |
| 300 | 5 | 30 | Absence | 40.7 | 59.3 |
| 350 | 5 | 30 | Absence | 31.5 | 68.5 |
| 400 | 5 | 30 | Absence | 24.7 | 75.3 |
| 450 | 5 | 30 | Absence | 27.2 | 72.8 |
| 500 | 5 | 30 | Absence | 30.3 | 69.7 |

### (3) Effect of CO flow rate and retention time

The final mixed gas composition according to the flow rate of supplied CO and retention time thereof in the retention reactor (30) is illustrated in Table 3 below.

**[Table 3]**

| Sulfur Temper ature ( °C) | CO Flow Rate (ml/min) | Retent ion Time (s ) | Cata lyst Pres ence or Abse nce | CO (Volu me%) | COS (Volum e%) | CO₂ (Volume %) | SO₂ (Volume ppm) |
|---|---|---|---|---|---|---|---|
| 400 | 5 | 30 | Abse nce | 24.7 | 75.3 | 0 | 0 |
| 400 | 10 | 30 | Abse nce | 26.5 | 73.5 | 0 | 0 |
| 400 | 50 | 30 | Abse nce | 46.2 | 51.5 | 2.3 | 340 |
| 400 | 100 | 30 | Abse nce | 75.6 | 21.5 | 2.9 | 580 |
| 400 | 5 | 10 | Abse nce | 45.1 | 54.9 | 0 | 0 |
| 400 | 5 | 30 | Abse nce | 25.2 | 74.8 | 0 | 0 |
| 400 | 5 | 60 | Abse nce | 24.9 | 75.1 | 0 | 0 |

### (4) Effects according to catalyst type and conditions

The final mixed gas composition according to the type of catalyst provided to the catalytic reactor (40), the temperature of the catalytic reactor (40), and the catalyst space velocity are illustrated in Tables 4, 5, and 6 below, respectively. At this time, the catalyst space velocity is the value obtained by dividing the gas amount (Nm³/h) that the catalyst may process per hour by the catalyst charging amount (m³), which means the amount of gas that a unit amount of catalyst may process per hour, and is a numerical value corresponding to the physical properties of the catalyst itself.

Here, the space velocity (Vs) corresponds to a property determined by measuring in the normal state, for example, 0°C Celsius, 1 atm (in Nm³, N means "Normal"), and thus, when calculating the catalyst amount using the space velocity (Vs), the actual exhaust gas flow rate (Mex) was converted to the exhaust gas flow rate in the normal state and calculated. At this time, the space velocity is the feed gas processing flow rate per unit volume of catalyst, for example, flow rate(ml/min)/catalyst volume(ml), and the unit remains only as h⁻¹. The space velocity may be changed by increasing the feed flow rate for the same amount of catalyst or by adjusting the amount of catalyst, and in this experiment, the flow rate was changed, thereby performing adjustment.

**[Table 4]**

| Sulfur Temper ature (° C) | CO Flow Rate (ml/min) | Retent ion Time (s ) | Cataly st Presen ce or Absenc e | CO (Volume %) | COS (Volume %) | CO₂ (Volume %) | SO₂ (ppm) |
|---|---|---|---|---|---|---|---|
| 400 | 5 | 30 | Absenc e | 24.7 | 75.3 | 0 | 0 |
| 400 | 5 | 30 | NiS | 49.9 | 50.1 | 0 | 0 |
| 400 | 5 | 30 | Sb₂O3 | 14.4 | 85.6 | 0 | 0 |
| 400 | 5 | 30 | NiMo | 0.3 | 99.7 | 0 | 0 |
| 400 | 5 | 30 | CoMo | 0.1 | 99.9 | 0 | 0 |
| 400 | 50 | 30 | Absence | 46.2 | 51.5 | 2.3 | 340 |
| 400 | 50 | 30 | CoMo | 13.2 | 86.3 | 0.5 | 0 |

**[Table 5]**

| Sulfu r Tempe ratur e (°C) | Catal yst Tempe ratur e (°C) | CO Flow Rate (ml/min ) | Retent ion Time (s ) | Cata lyst | CO (Volume %) | COS (Volum e %) | CO₂ (Volum e %) | SO₂ (ppm) |
|---|---|---|---|---|---|---|---|---|
| 400 | 170 | 50 | 30 | CoMo | 52.2 | 47.8 | 0 | 0 |
| 400 | 200 | 50 | 30 | CoMo | 13.2 | 86.3 | 0.5 | 0 |
| 400 | 225 | 50 | 30 | CoMo | 13.1 | 86.2 | 0.6 | 0 |
| 400 | 250 | 50 | 30 | CoMo | 14.6 | 84.7 | 0.7 | 0 |
| 400 | 300 | 50 | 30 | CoMo | 23.4 | 75.5 | 1.1 | 470 |

**[Table 6]**

| Sulfur Tempe rature (°C) | Catal yst Tempe ratur e (°C) | CO Flow Rate (ml/min ) | Retent ion Time (s ) | Catal yst | Space Velocity (h⁻¹) | CO (Volume %) | COS (Volume %) | CO₂ (Volume %) |
|---|---|---|---|---|---|---|---|---|
| 400 | 200 | 50 | 30 | CoMo | 4,000 | 26.4 | 73.6 | - |
| 400 | 200 | 50 | 30 | CoMo | 5,000 | 21.6 | 77.7 | 0.7 |
| 400 | 200 | 50 | 30 | CoMo | 6, 000 | 13.2 | 86.3 | 0.5 |
| 400 | 200 | 50 | 30 | CoMo | 7,000 | 15.8 | 83.9 | 0.3 |
| 400 | 200 | 50 | 30 | CoMo | 10, 000 | 29.5 | 70.5 | - |

Although the embodiments of the present disclosure have been described in detail above, the scope of the present disclosure is not limited thereto, and it will be apparent to those skilled in the art that various modifications and variations are possible within a scope that does not depart from the technical spirit of the present disclosure described in the claims.

### Description of Reference Characters

- 10:: sulfur reaction tank
- 20:: gas-liquid reactor
- 30:: retention reactor
- 40:: catalytic reactor
- 50:: condenser
- 60:: filter
- 70:: cold box

## Claims

1. A method for synthesizing carbonyl sulfide, comprising:
an operation of contacting carbon monoxide (CO) and sulfur in at least one form of a liquid phase and a gas phase and obtaining a mixed gas containing carbonyl sulfide; and
an operation of contacting the mixed gas with a sulfurization catalyst and further converting unreacted sulfur and carbon monoxide into carbonyl sulfide,
wherein the sulfurization catalyst contains molybdenum (Mo) as a main active metal.

2. The method for synthesizing carbonyl sulfide of claim 1, further comprising an operation of retaining the mixed gas obtained by the operation of obtaining the mixed gas, with a retention time of 30 seconds to 5 minutes, before the operation of further converting into the carbonyl sulfide.

3. The method for synthesizing carbonyl sulfide of claim 1, wherein the sulfur of the operation of obtaining the mixed gas is supplied at a temperature of 350 to 500°C.

4. The method for synthesizing carbonyl sulfide of claim 1, wherein the sulfurization catalyst is a catalyst supported by at least one porous support selected from the group consisting of silica, alumina and titania, and including at least one selected from the group consisting of cobalt, nickel, and tungsten as a promotor.

5. The method for synthesizing carbonyl sulfide of claim 1, further comprising an operation of cooling a resultant obtained in the operation of further converting into the carbonyl sulfide, to a temperature less than a boiling point of sulfur and separating liquid sulfur into gas and liquid.

6. The method for synthesizing carbonyl sulfide of claim 5, further comprising an operation of obtaining a liquid carbonyl sulfide by boiling point separation, from a gas obtained by an operation of separating sulfur into gas and liquid.

7. An apparatus for synthesizing carbonyl sulfide, comprising:
a gas-liquid reactor for contacting carbon monoxide (CO) and sulfur in at least one form of a liquid phase and a gas phase and obtaining a mixed gas containing carbonyl sulfide; and
a catalytic reactor for contacting the mixed gas with a sulfurization catalyst and further converting unreacted sulfur and carbon monoxide into carbonyl sulfide,
wherein the catalytic reactor includes a sulfurization catalyst containing molybdenum (Mo) as a main active metal.

8. The apparatus for synthesizing carbonyl sulfide of claim 7, further comprising a sulfur reaction tank for supplying the sulfur.

9. The apparatus for synthesizing carbonyl sulfide of claim 7, further comprising a retention reactor disposed downstream of the gas-liquid reactor and upstream of the catalytic reactor and capable of retaining the mixed gas discharged from the gas-liquid reactor.

10. The apparatus for synthesizing carbonyl sulfide of claim 7, further comprising a condenser disposed downstream of the catalytic reactor, cooling a resultant discharged from the catalytic reactor to a temperature less than a boiling point of sulfur, and separating liquid sulfur into gas and liquid.

11. The apparatus for synthesizing carbonyl sulfide of claim 10, further comprising a cold box disposed downstream of the condenser and obtaining liquid carbonyl sulfide by boiling point separation from gas discharged from the condenser.
